# EUROPÄISCHE PATENTSCHRIFT

(11) **EP 1 214 221 B1**
(45) Veröffentlichungstag und Bekanntmachung des Hinweises auf die Patenterteilung: **31.03.2004**
(21) Anmeldenummer: 00960611.2
(22) Anmeldetag: 06.09.2000
(51) Int. Cl.: B60N 2/28, B60N 2/427

(54) **ANORDNUNG EINES KINDERSITZES AN EINEM FAHRZEUGSITZ**
CHILD SEAT ARRANGEMENT ON A MOTOR VEHICLE SEAT
SYSTEME POUR INSTALLER UN SIEGE POUR ENFANT SUR UN SIEGE DE VEHICULE

(30) Priorität: 25.09.1999 DE 19946056
(43) Veröffentlichungstag der Anmeldung: 19.06.2002
(73) Patentinhaber: Bayerische Motoren Werke Aktiengesellschaft, 80809 München (DE)
(72) Erfinder: WAGNER, Bernhard, 85748 Garching (DE)
(74) Vertreter: Schernhammer, Herbert
(86) Internationale Anmeldenummer: PCT/EP2000/008685
(87) Internationale Veröffentlichungsnummer: WO 2001/023209

(56) Entgegenhaltungen:
- EP-A- 0 554 807
- EP-A- 0 689 955
- EP-A- 0 927 659
- WO-A-98/25789
- DE-A- 19 850 961
- US-A- 5 468 045

## Beschreibung

Die Erfindung betrifft die Anordnung eines Kindersitzes an einem Fahrzeugsitz nach dem Oberbegriff des Anspruchs 1. (siehe z.B. EP-A-0 927 659 (A2)).

Bislang wurden Kindersitze in Fahrzeugen üblicherweise über das fahrzeugseitige Gurtsystem oder zusätzliche, in das Fahrzeug montierte Gurte befestigt. Zukünftig gibt es den sogenannten ISOFIX-Standard, der in verschiedenen Normen verankert ist bzw. verankert werden wird. Durch den ISOFIX-Standard wird über Verriegelungselemente am Kindersitz eine grundsätzlich starre Verbindung zu Adaptern am Fahrzeugsitz vorgeschrieben. Durch diese unmittelbare Anbindung nimmt der Kindersitz ohne zeitliche Verschiebung an der Verzögerung des Fahrzeugs teil. Die Anbindung eines Kindersitzes an einem Fahrzeugsitz nach dem ISOFIX-Standard ist beispielsweise in der DE 299 03 414 U1 beschrieben.

Nachteilig bei einer Anbindung nach dem ISOFIX-Standard ist jedoch, dass das Kind im Crashfall durch das kindersitzeigene Gurtsystem nach wie vor eine gewisse Vorverlagerung in Fahrtrichtung erfährt, während der Kindersitz selbst starr mit dem Fahrzeugsitz verbunden bleibt. Hierdurch wird die Klemmung des Kindes im Kindersitz verringert. Insbesondere beim Rebound besteht bei einem Kindersitz mit Beckengurt und Fangtisch die Gefahr, dass das Kind aus dem Kindersitz "herausgezogen" wird.

Durch die Erfindung gemäß Anspruch 1 wird diese Gefahr vermieden bzw. verringert, indem bei einer crashbedingten Verzögerung des Fahrzeugs eine begrenzte Verschiebung zumindest der Rückenlehne des Kindersitzes in Fahrtrichtung erfolgt, um die Verlagerung des Kindes innerhalb des kindersitzseitigen Gurtsystems zu kompensieren. Hierdurch wird das Kind in unverändert engem Kontakt zwischen dem kindersitzseitigen Gurtsystem und dem Kindersitz gehalten. Damit ergibt sich eine höhere Sicherheit für das Kind, zusätzlich zu den mit der ISOFIX-Anbindung erreichten Vorteilen.

Zwar ist aus der e.g. EP 0 927 659 A2 eine Anordnung eines Kindersitzes an einem Fahrzeugsitz über ein ISOFIX-System bekannt. Bei der bekannten Anordnung ist zwischen dem Fahrzeugsitz und dem Kindersitz ein Deformationselement vorgesehen, durch das Spitzenbeanspruchungen in der Rast- und/oder Befestigungseinrichtung des ISOFIX-Systems verringert werden sollen. Durch die bei einer Verformung des Deformationselements bewirkte Relativbewegung des Kindersitzes gegenüber dem Fahrzeugsitz werden Kraftspitzen, wie sie beispielsweise beim Aufprall ungesicherten Ladegutes auf die Rücksitze der Rückenlehne des Fahrzeugsitzes auftreten, reduziert.

Im Unterschied hierzu sind bei der vorliegenden Erfindung am Kindersitz Mittel vorgesehen, die eine Relativbewegung (der Rückenlehne) des Kindersitzes gegenüber der kindersitzseitigen Befestigungseinrichtung ermöglichen, wobei das kindersitzseitige Gurtsystem jedoch starr mit der Befestigungseinrichtung verbunden bleibt, um das Kind bestmöglich zurückzuhalten. Durch das Deformationselement gemäß der EP 0 927 659 A2 hingegen nimmt das kindersitzseitige Gurtsystem in gleicher Weise an der durch die Verformung des Deformationselementes bewirkten begrenzten Vorwärtsverlagerung teil wie der gesamte Kindersitz, mit den eingangs zum Stand der Technik genannten Nachteilen.

Bevorzugt wird die Erfindung durch eine Verschiebung des gesamten Kindersitzes gegenüber dem Fahrzeugsitz realisiert. Zur Erreichung der Vorteile der Erfindung ist es jedoch ausreichend, wenn eine Verschiebung alleine der Rückenlehne ermöglicht wird.

Das kindersitzseitige Gurtsystem wird beispielsweise von einem Beckengurt mit einem Fangtisch gebildet. Bei einem derartigen System wirkt sich die Erfindung besonders vorteilhaft aus, da die erfindungsgemäß erhöhte Klemmung des Kindes die Vorverlagerung begrenzt und ein "Herausziehen" des Kindes beim Rebound zuverlässig verhindert. Mit Anwendung der Erfindung ist es auch möglich, einen Kindersitz mit einem Fangtisch in eine Schlaf- oder Komfortstellung zu bringen, in der die Rückenlehne des Kindersitzes gegenüber der Sitzfläche einen größeren Neigungswinkel aufweist, so dass sich der Abstand zwischen Rückenlehne und Fangtisch vergrößert. Die erfindungsgemäß ermöglichte Verschiebung (der Rückenlehne) des Kindersitzes im Crashfall gewährleistet auch in der Schlaf- oder Komfortstellung noch eine ausreichende Klemmung des Kindes im Kindersitz.

Die Erfindung kann grundsätzlich auch bei Kindersitzen mit einem kindersitzseitigen Mehrpunkt-Gurtsystem ohne Fangtisch, in der Regel einem 5-Punkt-Gurtsystem, angewandt werden. Sie wirkt sich auch bei solchen Kindersitzen vorteilhaft aus, deren Mehrpunkt-Gurtsystem im Crashfall mit dem Kindersitz verlagert wird, da durch die Mittel zur Verschiebung (der Rückenlehne) des Kindersitzes, wie beispielsweise einen aufweitbaren Schlitz oder einen Abscherbolzen, zusätzlich Energie abgebaut werden kann.

Vorteilhafte Ausgestaltungen der Erfindung sind Gegenstand der Unteransprüche.

Mögliche Ausführungsbeispiele der Erfindung sind in der Zeichnung dargestellt und werden nachfolgend näher erläutert. Es zeigt:
- Figur 1: eine bekannte Anordnung eines Kindersitzes auf einem Fahrzeugsitz mittels eines fahrzeugseitigen Gurtsystems, in der Seitenansicht,
- Figur 2: eine der Figur 1 entsprechende Darstellung einer erfindungsgemäßen Anordnung und
- Figuren 3 und 4: Details der Erfindung in vergrößerter Schnittdarstellung.

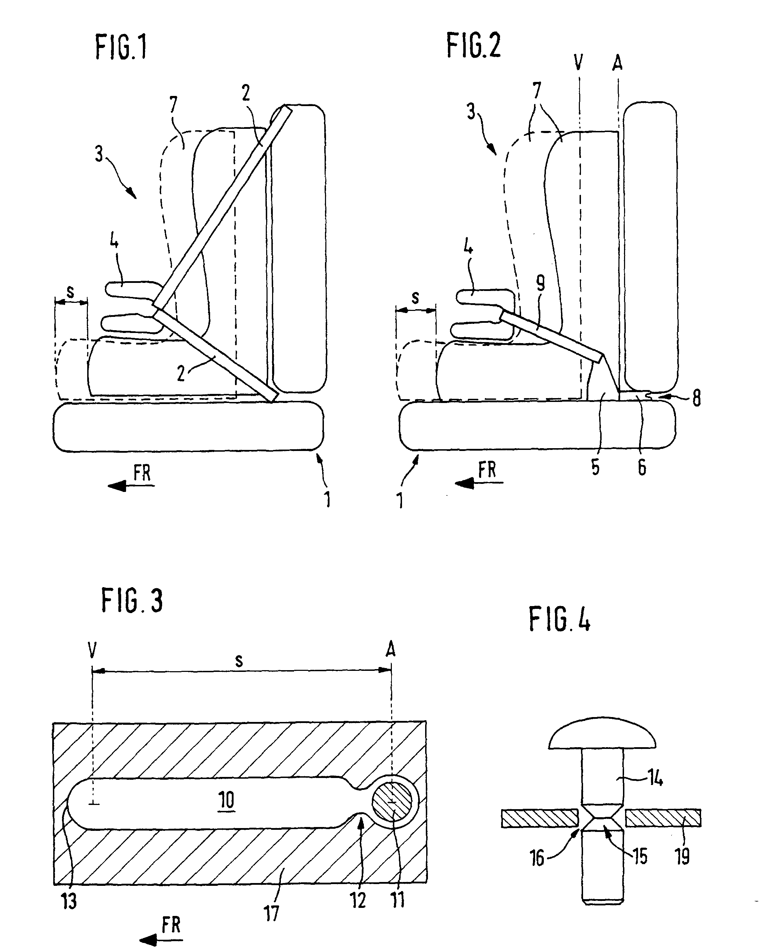

Figur 1 zeigt einen Fahrzeugsitz 1, an dem über ein fahrzeug- oder sitzseitiges Gurtsystem 2, vorzugsweise in Dreipunkt-Anordnung, ein Kindersitz 3 in herkömmlicher Weise befestigt ist. Über das Gurtsystem 2 wird sowohl der Kindersitz 3 als auch das Kind (nicht dargestellt) gehalten. In das Gurtsystem ist zusätzlich ein Fangtisch 4 eingesetzt. Bei einer crashbedingten Verzögerung des Fahrzeuges erfolgt eine durch gestrichelte Linien dargestellte Verlagerung des Kindersitzes 3 in Fahrtrichtung FR. Diese Verlagerung um die Strecke s (in Folge der Gurtlose und der Dehnung des Gurtbandes des Gurtsystems 2) verschlechtert zwar den Verlauf der auf das Kind einwirkenden Verzögerung, hält jedoch die Klemmung des Kindes zwischen dem Fangtisch 4 und der "nachrückenden" Rückenlehne 7 des Kindersitzes 3 aufrecht.

Figur 2 zeigt eine erfindungsgemäße Anordnung eines Kindersitzes 3 über eine in ihrer Gesamtheit mit 5 bezeichnete Befestigungseinrichtung nach der ISOFIX-Norm. Die Befestigungseinrichtung 5 weist zu beiden Seiten des Kindersitzes 3 zwei lang gestreckte Verriegelungselemente 6 auf, die mit ihren offenen Endabschnitten 8 in nicht dargestellte ISOFIX-Adapter am Fahrzeugsitz 1 eingreifen. Das Kind wird über ein kindersitzseitiges Gurtsystem 9 mit einem Fangtisch 4 am Kindersitz 3 gehalten.

Im Fall eines Fahrzeugcrashs bleibt durch die starre ISOFIX-Anbindung die Rückenlehne 7 des Kindersitzes 3 in der mit durchgezogenen Linien dargestellten Ausgangslage A gegenüber dem Fahrzeugsitz 1. Demgegenüber erfolgt crashbedingt eine gewisse, wenn auch gegenüber den herkömmlichen Systemen nach Figur 1 verringerte Vorverlagerung des Kindes in Fahrtrichtung FR. Durch diese Vorverlagerung wird die Klemmung des Kindes im Kindersitz 3 verringert.

Gemäß der Erfindung sind die Befestigungseinrichtung 5 und der Kindersitz 3 so ausgebildet, dass sie bei einer crashbedingten Verzögerung des Fahrzeuges eine begrenzte Verschiebung des Kindersitzes 3 in Fahrtrichtung FR um die Wegstrecke s ermöglichen, wodurch der Kindersitz 3 die Position V einnimmt. An der Verlagerung nimmt die Befestigungseinrichtung 5 selbst nicht teil, so dass das an der Befestigungseinrichtung 5 befestigte kindersitzseitige Gurtsystem 9 starr mit dem Fahrzeugsitz 1 verbunden bleibt.

Gemäß dem Ausführungsbeispiel der Figur 3 ist in einem Abschnitt 17 der Befestigungseinrichtung 5 ein in Fahrtrichtung FR verlaufender Schlitz 10 vorgesehen, in den ein kindersitzseitiger Bolzen 11 eingreift. Im Normalbetrieb des Fahrzeuges wird der Bolzen 11 in der in Figur 3 dargestellten Ausgangslage A gehalten, da eine Verengung 12 benachbart zum fahrtrichtungsabgewandten Ende des Schlitzes 10 eine Verschiebung des Bolzens 11 im Schlitz 10 verhindert. Bei Überschreitung eines vorgegebenen Grenzwertes der Fahrzeugverzögerung, wie sie bei einem Fahrzeugcrash erreicht wird, weitet der Bolzen 11 aufgrund der einwirkenden Trägheitskräfte des Kindersitzes 3 und des damit gesicherten Kindes die Verengung 12 auf und bewegt sich entlang des Schlitzes 10 bis zum endseitigen Anschlag 13.

Durch diese Vorverlagerung um die Strecke s wird die in Figur 2 gestrichelt eingezeichnete Vorverlagerung V des Kindersitzes 3 bewirkt, mit dem Vorteil einer erhöhten Klemmung des Kindes im Kindersitz 3. Die Verengung 12 ist so zu dimensionieren, daß bei den im normalen Fahrbetrieb auftretenden Kräften eine Verlagerung des Bolzens 11 im Schlitz 10 nicht erfolgt.

Figur 4 zeigt ein weiteres Ausführungsbeispiel der Erfindung, mit einem Bolzen 14, der den Kindersitz 3 gegenüber einem Abschnitt 19 der Befestigungseinrichtung 5 fixiert. Der Bolzen 14 weist eine Sollbruchstelle 15 auf, die im Bereich einer Öffnung 16 des Abschnittes 19 angeordnet ist. Bei Überschreitung einer bestimmten crashbedingten Fahrzeugverzögerung wird der als Abscherbolzen ausgelegte Bolzen 14 durchgetrennt und gibt somit den Kindersitz 3 für eine begrenzte Verlagerung in Fahrtrichtung FR frei. Gleichzeitig ist der Bolzen 14 in einer weiteren, nicht dargestellten Führung gehalten, so dass die Verlagerung in Fahrtrichtung FR begrenzt ist.

## Patentansprüche

1. Anordnung eines Kindersitzes (3) an einem Fahrzeugsitz (1), wobei der Kindersitz (3) ein fahrzeugunabhängiges Gurtsystem (9) zur Sicherung des Kindes sowie eine Befestigungseinrichtung (5) zur Anbindung des Kindersitzes (3) an den Fahrzeugsitz (1) aufweist,
**dadurch gekennzeichnet,**
**dass** das fahrzeugunabhängige Gurtsystem (9) an der Befestigungseinrichtung (5) befestigt ist, wobei am Kindersitz (3) Mittel (10, 11; 14, 16) vorgesehen sind, die im Fall einer crashbedingten Verzögerung des Fahrzeugs eine begrenzte Verschiebung zumindest der Rückenlehne (7) des Kindersitzes (3) in Fahrtrichtung (FR) ermöglichen, bei unverändert starrer Anbindung des fahrzeugunabhängigen Gurtsystems (9) an die Befestigungseinrichtung (5) während der crashbedingten Verzögerung des Fahrzeugs.

2. Anordnung nach Anspruch 1, **dadurch gekennzeichnet, dass** die Mittel einen in Fahrtrichtung (FR) verlaufenden Schlitz (10) in der Befestigungseinrichtung (5) umfassen, in den ein kindersitzseitiger Verbindungsbolzen (11) eingreift, wobei der Schlitz (10) benachbart zur fahrtrichtungsabgewandten Ausgangslage (A) des Verbindungsbolzens (11) eine Verengung (12) aufweist, die durch den Verbindungsbolzen (11) aufweitbar ist, wenn auf den Kindersitz (3) eine crashbedingte Verzögerung einwirkt.

3. Anordnung nach Anspruch 1,
**dadurch gekennzeichnet, dass** die Mittel einen kindersitzseitigen Bolzen (14) umfassen, der in die Befestigungseinrichtung (5) eingreift und eine Sollbruchstelle (15) aufweist, die bei einer crashbedingten Verzögerung des Kindersitzes (3) zum Bruch des Bolzens (14) führt.

## Claims

1. An arrangement of a child's seat (3) on a vehicle seat (1), wherein the child's seat (3) comprises a belt system (9) independent of the vehicle for securing the child and a fastening device (5) for securing the child's seat (3) to the vehicle seat (1),
**characterised in that**
the independent belt system (9) is secured to the fastening device (5), and the child's seat (3) is provided with means (10, 11; 14, 16) which, in the event of deceleration of the vehicle due to a crash, permit limited displacement of at least the back (7) of the child's seat (3) in the direction of travel (FR) without altering the rigid attachment of the independent belt system (9) to the fastening device (5) during the deceleration resulting from the crash.

2. An arrangement according to claim 1, **characterised in that** the means comprise a slot (10) in the fastening device (5) and extending in the direction of travel (FR), the slot engaging a connecting bolt (11) on the child's seat, wherein the slot (10), near the starting position (A) of the connecting bolt (11) remote from the direction of travel, has a constriction (12) which can be expanded by the bolt (11) when the child's seat (3) is acted upon by deceleration resulting from a crash.

3. An arrangement according to claim 1, **characterised in that** the means comprise a bolt (14) on the child's seat which engages the fastening device (5) and has a set breaking place (15) which causes the bolt (14) to break if the child's seat (3) decelerates due to a crash.

## Revendications

1. Système pour installer sur un siège de véhicule (1), un siège d'enfant (3) qui présente, pour la sécurité de l'enfant un système de ceinture (9), indépendant du véhicule et un dispositif de fixation (5) pour maintenir le siège d'enfant (3) sur le siège de véhicule (1),
**caractérisé en ce que**
le système de ceinture (9) indépendant du véhicule est fixé au dispositif de fixation (5) et sur le siège d'enfant (3) il est prévu des moyens (10, 11 ; 14, 16) qui, dans le cas d'une décélération du véhicule produite par un crash, permettent un glissement du dossier (7) du siège d'enfant (3) limité dans le sens (FR) de déplacement du véhicule, la liaison rigide du système de ceinture (9) indépendant du véhicule, avec le dispositif de fixation (5) restant inchangée pendant la décélération produite par le crash.

2. Système selon la revendication 1,
**caractérisé en ce que**
les moyens comprennent une fente (10), s'étendant selon la direction de déplacement (FR) dans le dispositif de fixation (5), et dans laquelle est en prise un tenon de liaison (11) du côté du siège d'enfant, et cette fente (10) présente près de la position initiale (A) du tenon de liaison (11) située en arrière par rapport au sens de déplacement, un rétrécissement (12) qui peut être élargi par le tenon de liaison (11) quand une décélération produite par un crash s'exerce sur le siège d'enfant (3).

3. Système selon la revendication 1,
**caractérisé en ce que**
les moyens comprennent un tenon situé du côté du siège d'enfant, qui est en prise dans le dispositif de fixation (5) et présente un point de rupture obligée (15) qui, sous l'effet d'une décélération du siège d'enfant (3) produite par un crash, entraîne la rupture du tenon (14).
